# FASCICULE DE BREVET EUROPEEN

(11) **EP 1 228 584 B1**
(45) Date de publication et mention de la délivrance du brevet: **28.12.2005**
(21) Numéro de dépôt: 01974411.9
(22) Date de dépôt: 28.09.2001
(51) Int. Cl.: H04B 7/185

(54) **PROCEDE DE SELECTION D'UNE STATION SOL AU SEIN D'UN RESEAU DE TELECOMMUNICATION AERONAUTIQUE**
VERFAHREN ZUR AUSWAHL EINER BODENSTATION IN EINEM ATN-NETZWERK
METHOD FOR SELECTING A GROUND STATION WITHIN AN AERONAUTICAL TELECOMMUNICATION NETWORK

(30) Priorité: 03.10.2000 FR 0012605
(43) Date de publication de la demande: 07.08.2002
(73) Titulaire: Thales, 75008 Paris (FR)
(72) Inventeur: BOREL, Matthieu, Thales Intellectual Property, F-94117 Arcueil Cedex (FR)
(74) Mandataire: Beylot, Jacques
(86) Numéro de dépôt international: PCT/FR2001/003020
(87) Numéro de publication internationale: WO 2002/030007

(56) Documents cités:
- FR-A- 2 787 658
- SIGNORE T L ET AL: "THE AERONAUTICAL TELECOMMUNICATION NETWORK (ATN)" IEEE MILITARY COMMUNICATIONS CONFERENCE,US,NEW YORK, NY: IEEE, 19 octobre 1998 (1998-10-19), pages 40-44, XP000830503 ISBN: 0-7803-4507-X

## Description

Pour les échanges d'informations entre un aéronef et le sol, un nouveau réseau aéronautique de télécommunication dit ATN (abréviation de l'expression anglo-saxonne " Aeronautical Telecommunication Network ") défini et normalisé par l'OACI (sigle désignant l'Organisation de l'Aviation Civile Internationale) est en train d'être mis progressivement en place à la surface du globe. Ce réseau aéronautique de télécommunication ATN est un réseau de transmission de données numériques dédié aux échanges d'informations entre les aéronefs et le sol pour des activités à la fois de contrôle aérien dites ATC (abréviation de l'anglo-saxon " Air Traffic Control ") avec les autorités assurant le contrôle et la régulation du trafic aérien, et de gestion de flotte dites AOC (abréviation de l'anglo-saxon " Aeronautical Operational Communication ") avec les compagnies aériennes exploitant les aéronefs. Il comporte une partie aérienne constituée de moyens de télécommunication air-sol embarqués à bord des aéronefs et une partie terrestre constituée de stations sol équipées de moyens de télécommunication air-sol leur permettant d'entrer en communication avec les aéronefs traversant leurs zones de couverture et de moyens de routage leur permettant d'acheminer les communications échangées avec les aéronefs vers des centres de contrôle aérien ou des centres de gestion des compagnies aériennes. Les stations sol sont prévues pour former à terme, un réseau terrestre avec un maillage couvrant la surface du globe.

Les moyens de télécommunication sol-air assurant la liaison entre un aéronef et une station sol du réseau aéronautique de télécommunication ATN constituent ce que l'on appelle un sous-réseau. Ils peuvent faire appel à divers modes de communication numériques dont :
- un mode de communication numérique air-sol indirect par satellites de télécommunication fonctionnant en UHF selon un protocole spécifique dit " Satcom Data 3 ",
- un mode de communication numérique air-sol en vue directe, par VHF, selon un protocole spécifique dit " VDL mode 2 ",
- un mode de communication numérique air-sol en vue directe avec un radar secondaire selon un protocole spécifique dit " Mode S ",
- un mode de télécommunication numérique air-sol en HF selon un protocole spécifique dit " mode HF DL " (abréviation de l'expression anglo-saxonne " High Frequence Data Link "),
les différents protocoles ayant été définis et normalisés à l'occasion de conférences organisées par l'AEEC (abréviation anglo-saxonne de " Airline Electronic Engineering Committee ") sous l'autorité de l'OACI.

L'OACI a émis des recommandations définissant les échanges protocolaires destinés à établir une connexion VDL Mode 2 entre un aéronef et une station sol du réseau aéronautique de télécommunication ATN, maintenir une connexion établie, réaliser des échanges de données au sein d'une connexion établie et rompre une connexion mais n'impose aucune contrainte au niveau des choix, par un aéronef, d'une station VDL mode 2 sol lui servant d'accès au réseau ATN terrestre et du ou des sous-réseaux utilisés pour la liaison air-sol avec la station sol choisie comme porte d'accès au réseau ATN terrestre, ses documents normatifs précisant seulement que le terminal embarqué à bord de l'aéronef comporte un organe de décision assurant ces choix.

Pour qu'une station VDL sol puisse être choisie comme porte d'accès au réseau ATN terrestre, il faut que l'aéronef se trouve dans sa zone de couverture et qu'elle soit disponible. Il peut également arriver que plusieurs stations VDL sol soient disponibles simultanément de sorte que l'organe de décision embarqué à bord de l'aéronef peut encore avoir à choisir entre plusieurs station VDL sol. Le critère de disponibilité est alors insuffisant et doit être complété par un autre critère dit de qualité de service ou QOS (abréviation anglo-saxonne de " Quality Of Service ") qui prend en compte les qualités et coûts des stations sol disponibles et des modes de communication air-sol qu'il est possible d'utiliser avec elles.

La mise en oeuvre du critère de qualité se fait en général, à partir d'un système de notation établi par la compagnie exploitant l'aéronef en fonction de paramètres qui lui sont propres, qualité de la liaison, coût du mode de transmission, coût du service de la station sol, etc. Ce système de notations est mémorisé dans une base de données embarquée à bord de l'aéronet et consulté par l'organe de décision qui oriente son choix vers la station VDL sol disponible et le ou les modes de communication air-sol autorisés par cette station sol, ayant les meilleures notes de préférence.

Un exemple de système de gestion de modes de communication pour aéronef est décrit dans la demande de brevet français FR 2 787 658. Ce système assure, à bord d'un aéronef, le choix automatique d'un sous-réseau de transmission appartenant aux réseaux aéronautiques de télécommunication ACARS et ATN en appliquant un critère de disponibilité et un critère de qualité sur les éléments d'une base de données ATN-ACARS rassemblant, pour chaque sous-réseau susceptible d'être mis en oeuvre, des informations sur :
- les consignes du pilote,
- les consignes de la compagnie aérienne employant l'aéronef,
- les coûts,
- les performances, la sécurité/fiabilité,
- la configuration de l'aéronef, c'est-à-dire les têtes de sous-réseaux effectivement installées, la disponibilité en dynamique.

Comme le réseau de communication aéronautique ATN est dans une phase évolutive, avec un renforcement permanent du nombre des stations sol et donc de la concurrence entre les fournisseurs d'accès, la base de données embarquées utilisée par l'organe de décision pour tenir compte des préférences de la compagnie gérant l'aéronef, dans le choix d'une station sol et du ou des modes de transmission air-sol pour entrer en liaison avec la station sol élue a tendance à grossir et occuper un espace mémoire de plus en plus important. En outre, elle doit être remise à jour de manière assez fréquente, ce qui complique les opérations de maintenance au sol de l'aéronef.

La présente invention a pour but un procédé de sélection d'une station sol au sein d'un réseau de télécommunication aéronautique qui se satisfasse, pour les préférences de la compagnie exploitant l'aéronef, relatives aux stations sol, d'une base de données relativement restreinte avec un moyen simple, quasiment automatique, de mise à jour.

Elle a également pour but un procédé de sélection d'une station sol au sein d'un réseau de télécommunication aéronautique qui permette un fonctionnement automatique de l'organe de décision tout en laissant une grande facilitée de modification des préférences de la compagnie exploitant l'aéronef, relatives aux stations sol et aux modes de communication air-sol utilisables avec ces dernières.

Elle a également pour but d'accélérer le processus de choix d'une station VDL sol.

L'invention a pour objet un procédé utilisable à bord d'un aéronef, pour la sélection d'une station sol au sein d'un réseau aéronautique de télécommunication comportant un réseau terrestre accessible par un ensemble de stations sol, ledit procédé mettant en oeuvre, au moyen d'un organe de décision, un critère de disponibilité et un critère de préférence sur les éléments d'une base de données embarquée à bord de l'aéronef, rassemblant des informations sur les stations sol et les modes de communications air-sol qui leur sont adaptés avec un système de notations caractérisé en ce qu'il consiste à :
lors de la préparation d'un plan de vol d'un aéronef et après détermination de la route de l'aéronef,
   - limiter les informations contenues dans la base de données embarquée aux stations sol dont les zones de couverture sont à portée de la route de l'aéronef définie par le plan de vol,
   - adopter pour éléments de la base de données embarquée, des notes de préférence associées à des identifiants repérant des couples formés chacun d'une station sol sélectionnée et d'un ou plusieurs modes de communication air-sol compatibles avec les équipements de l'aéronef et ceux de la station sol considérée,
   - établir une classification sur les éléments de la base de données embarquée tenant compte, pour chaque élément, de la position de la zone de couverture de la station sol qu'il concerne, par rapport à la route de l'aéronef définie par le plan de vol, ladite classification se manifestant par un adressage des éléments de la base de données fonction de la position géographique de l'aéronef le long de la route définie par son plan de vol,
   - charger cette base de données à bord de l'aéronef et, lors de l'exécution du plan de vol par un système de gestion du vol équipant l'aéronef et donnant périodiquement la position de l'aéronef sur la route définie par le plan de vol,
   - faire sélectionner, par l'organe de décision, dans la base de données embarquée, l'un des couples ou le couple station sol mode de communication air-sol ayant la meilleure note de préférence parmi ceux dont les identifiants figurent dans la base de données à l'adresse correspondant à la dernière position de l'aéronef communiquée par son système de gestion du vol.

L'invention part du principe que les seules stations sol dignes d'intérêt pour un aéronef sont celles qui sont susceptibles d'être disponibles et qui donc, ont une zone de couverture traversée par la route de l'aéronef, pour réduire la base de données embarquée donnant les préférences de la compagnie exploitante à ces seules stations sol et aux modes de communication air-sol utilisables avec elles. La sélection, lors de la préparation d'un vol, des éléments de la base de données embarquée relative aux préférences de la compagnie exploitante concernant les stations sol dont la zone de couverture est traversée par la route de l'aéronef et les modes de communication sol-air utilisables avec elles est une opération supplémentaire qui ne complique que très peu la préparation d'un vol puisqu'elle peut être effectuée, une fois connu le plan de vol, par un automate opérant sur une base de données centralisant au sol l'ensemble des préférences de la compagnie exploitante, disponible dans un centre de gestion au sol et constamment mise à jour. En outre, cette opération de sélection à chaque préparation de vol garantit un renouvellement systématique de la base de données embarquée et donc un suivi automatique des mises à jour des préférences de la compagnie exploitante qui n'ont plus à être effectuées qu'une seule fois sur une base de données centralisée.

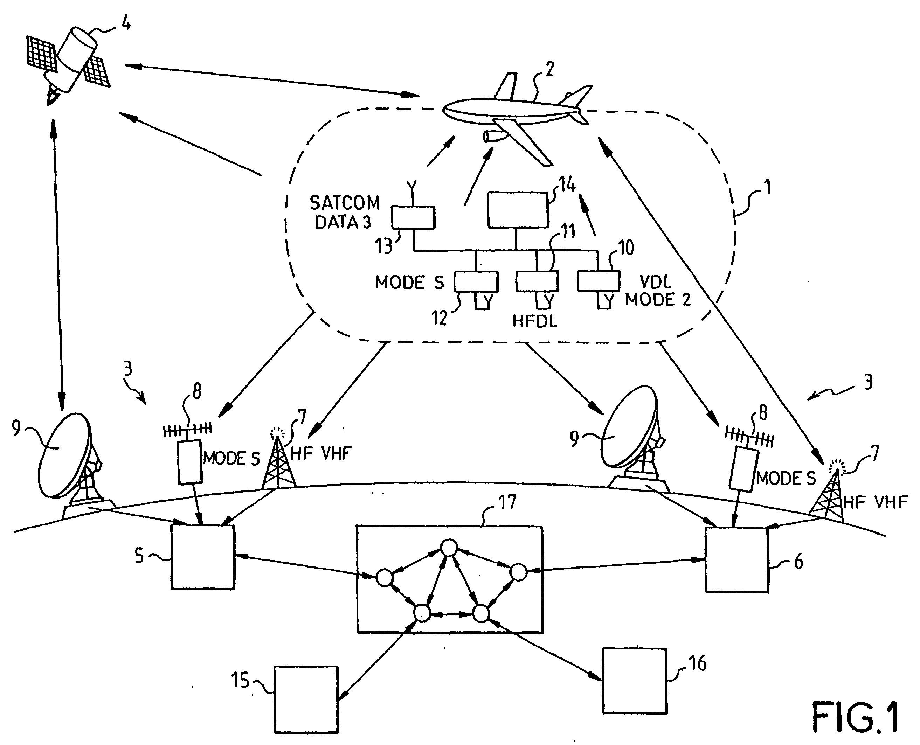

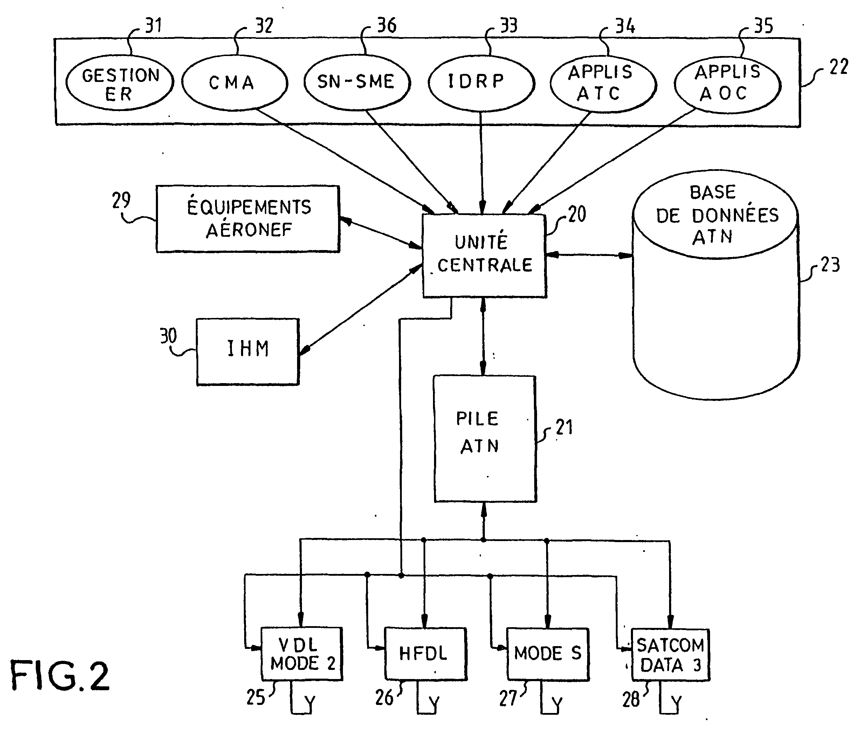

D'autres caractéristiques et avantages de l'invention ressortiront de la description ci-après, d'un mode de réalisation donnée à titre d'exemple. Cette description sera faite en regard du dessin dans lequel :
- une figure 1 schématise le réseau aéronautique de télécommunication ATN, et
- une figure 2 schématise un routeur embarqué de réseau aéronautique de télécommunication ATN.

Le réseau aéronautique de télécommunication ATN vise à assurer des liaisons numériques sol-bord, fiables et à haut débit pour des échanges d'informations entre des aéronefs au sol ou en vol et des centres au sol, que ces centres soient affectés à une activité de contrôle aérien, les informations échangées avec les autorités du contrôle aérien étant dites ATC, ou à une activité d'exploitation de l'aéronef, les informations échangées avec la ou les compagnies exploitant l'aéronef étant dites AOC, la distinction entre les deux types d'informations se justifiant par des contraintes de transmission différentes au niveau de la sécurité et de la fiabilité. Il est conçu pour utiliser les différents médias envisageables pour des liaisons air-sol (HF, VHF, radar mode S, UHF par satellite) et pour utiliser au sol des réseaux de transmission de données spécialisés ou non, commutés ou non, par câble ou ondes hertziennes, relayées ou non par satellite, afin de faire parvenir les informations transmises à destination.

Comme représenté à la figure 1, le réseau aéronautique de télécommunication ATN comporte une partie aérienne 1 à bord de chaque aéronef 2 raccordé et une partie terrestre 3.

La partie aérienne 1 se compose de divers équipements émetteurs-récepteurs embarqués sur un aéronef 2 et adaptés aux différents médias utilisables pour les communications air-sol. Ces équipements émetteurs-récepteurs et leurs correspondants au sol constituent des sous-réseaux de transmission. Sur la figure 1, est représenté un aéronef 2 avec une partie aérienne 1 de réseau aéronautique de transmission ATN comportant plusieurs émetteurs-récepteurs dont un émetteur-récepteur 10 constituant une tête de sous-réseau de transmission mode VDL 2 opérant en VHF selon un protocole spécifique normalisé, un émetteur-récepteur 11 constituant une tête de sous-réseau de transmission mode HF DL opérant en HF selon un autre protocole spécifique normalisé, un émetteur-récepteur 12 constituant une tête de sous-réseau de transmission mode S opérant en UHF en collaboration avec un radar secondaire selon un autre protocole également normalisé et un émetteur-récepteur 13 constituant une tête de sous-réseau de communication AMSS (abréviation de l'anglo-saxon " Aeronautical Mobile Satellite System ") mode Satcom data 3 opérant en UHF avec un relais satellitaire 4, selon encore un autre protocole normalisé. Ces divers émetteurs-récepteurs 10, 11, 12, 13 peuvent présenter des parties communes de sorte que les différents sous-réseaux peuvent ne pas être tous disponibles simultanément. Ils peuvent même ne pas être présents au complet sur un aéronef, cela dépendant du degré d'équipement de l'aéronef considéré. Ils sont gérés à bord d'un aéronef par un automate 14 dit routeur qui, en plus de leur gestion, assure, par manipulation d'une pile mémoire dans laquelle transitent les données à échanger avec le sol, l'initialisation, le maintien et l'achèvement d'une communication applicative sous le contrôle d'un module logiciel dit CMA (abréviation de l'expression anglo-saxonne " Context Management Agent "), le maintien et l'achèvement d'une connexion sous-réseau sous le contrôle d'un module logiciel dit SN-SME (abréviation de l'expression anglo-saxonne " Sub-Network System Management Entity "), le routage d'une communication sous le contrôle d'un module logiciel dit IDRP (abréviation de l'anglo-saxon " Inter Domain Routing Policy "), l'exécution d'applications préchargées de contrôle aérien comme la communication périodique de la position de l'aéronef au contrôle au sol sous le contrôle d'un module logiciel dit " Applis ATC " et l'exécution d'applications préchargées de gestion de flotte comme le suivi de la consommation de l'aéronef sous le contrôle d'un module logiciel dit " Applis AOC ".

La partie terrestre du réseau aéronautique de télécommunication ATN se compose de stations sol 5, 6. Ces stations sol 5, 6 sont équipées de moyens de communication sol-air, émetteurs-récepteurs HF-VHF 7, radar mode S 8, station terrestre de communication par satellite 9, leur permettant de communiquer avec les aéronefs passant dans leurs voisinages selon un ou plusieurs des modes de communication prévus : sous-réseau Satcom Data 3, sous-réseau VDL mode 2, sous-réseau Mode S ou sous-réseau mode HF DL et reliées entre elles et à divers centres au sol 15, 16 intéressés par des échanges d'informations avec les aéronefs, par des réseaux 17 de transmission numérique de données spécialisés ou non, commutés ou non, utilisant le câble ou les ondes hertziennes relayées ou non par satellite.

Un échange d'informations air-sol se fait sur l'initiative d'un aéronef. Lorsqu'un aéronef a à communiquer avec le sol, son routeur émet, par l'un des sous-réseaux de communication disponibles de l'aéronef, une requête de connexion applicative d'accès au réseau terrestre ATN dite " CM-Logon.request " (CM provenant de l'abréviation anglo-saxonne " Context Management ") qui renferme l'identité du routeur demandeur sous la forme d'un signal ISH (abréviation de l'anglo-saxon " Intermediate Signal Hello ") et certaines de ses caractéristiques utiles pour la configuration d'une liaison air-sol. Cela impose qu'au préalable, un lien ait été établi au niveau du sous-réseau. Pour se faire, l'aéronef scrute en permanence la disponibilité des sous-réseaux avec lesquels il est apte à communiquer. Lorsqu'une information de connéctivité de sous-réseau arrive au routeur, elle est transmise au module SN-SME qui devra décider de l'établissement d'un lien.

En effet, le routeur d'un aéronef peut recevoir une ou plusieurs propositions de connexion d'accès de la part de stations sol avec une ou plusieurs possibilités de sous-réseaux pour la liaison air-sol. Ainsi, lors de l'initialisation d'une connexion, le routeur embarqué d'un aéronef, doit être capable d'effectuer des choix aussi bien au niveau de la station sol à utiliser pour accéder au réseau terrestre ATN lorsque plusieurs stations sol proposent leurs services, qu'au niveau du ou des sous-réseaux à utiliser lorsque plusieurs sont proposés pour accéder à une même station sol. Par exemple, dans le cas du sous-réseau VDL Mode 2 (abréviation de l'expression anglo-saxonne VHF Data-Link) le choix de la station sol se fait ainsi au travers du module SN-SME.

Pour départager les différentes solutions d'accès au réseau terrestre ATN qui peuvent se présenter simultanément au routeur d'un aéronef, il est convenu de pourvoir le routeur de l'aéronef d'une base de données mémorisée, renfermant, pour chaque station sol du réseau ATN et, au niveau d'une station sol, pour chaque sous-réseau susceptible d'être utilisé avec elle :
- les consignes du pilote,
- les consignes de la compagnie exploitant l'aéronef,
- le coût,
- les performances, la sécurité, fiabilité,
- la configuration avion, c'est-à-dire les têtes de sous-réseau effectivement installées,
- la disponibilité en dynamique, et
de doter son module logiciel SN-SME d'un programme de notation engendrant une note de préférence pour chaque couple constitué d'une station sol disponible associée à un sous-réseau susceptible d'être utilisé avec elle, et d'un programme de sélection élisant le couple station sol- sous-réseau de communication ayant la meilleure note de préférence.

La figure 2 illustre, de manière schématique, un exemple d'architecture matérielle et logicielle pour un routeur embarqué de réseau aéronautique de télécommunication ATN. Un tel routeur est constitué d'un calculateur spécialisé comportant notamment: une unité centrale 20, une mémoire, et différentes interfaces d'entrée-sortie.

La mémoire comporte différentes parties dont, principalement, :
- une partie 21 dite pile ATN avec des registres dont la manipulation par l'unité centrale 20 permet la mise en application des protocoles de transmission du réseau ATN aussi bien pour engendrer le flux de données émis du bord vers le sol à partir des informations à transmettre et des informations de service utilisées pour l'établissement, le maintien et la conclusion d'une liaison au sein du réseau ATN, que pour l'extraction des informations contenues dans le flux de données reçues du sol au cours d'une liaison et leurs redirections vers les équipements embarqués concernés,
- une partie 22 utilisée pour le stockage de différents modules de programmes, et
- une partie 23 utilisée pour le stockage d'une base de données ATN sur les différentes stations sol et les sous-réseaux de communication qu'elles admettent.

Les interfaces d'entrée-sortie relient le routeur embarqué avec différents équipements de l'aéronef qui sont essentiellement :
- les différents systèmes émetteurs-récepteurs 25, 26, 27, 28 de l'aéronef pouvant jouer le rôle de têtes de sous-réseaux de communication air-sol pour le réseau ATN,
- les équipements 29 de l'aéronef pouvant être amenés à utiliser le réseau ATN pour échanger des informations avec le sol, et
- au moins une interface homme-machine IHM 30 telle que, par exemple, le MCDU, permettant un dialogue du routeur embarqué avec l'équipage de l'aéronef pour que celui-ci puisse donner ses consignes au routeur et en retirer diverses informations sur l'état des liaisons établies au travers du réseau ATN.

Comme indiqué précédemment, un routeur embarqué est doté de différents modules logiciels exécutés en temps partagés par son unité centrale 20. Parmi ces modules logiciels, les principaux sont :
- un module logiciel de gestion 31 et de répartition de tâches gérant les activités des différents émetteurs-récepteurs embarqués 25, 26, 27, 28 pouvant servir de tête de sous-réseau de communication,
- un module logiciel CMA 32 chargé de l'initialisation, du maintien et de la coupure d'une liaison applicative,
- un module logiciel SN-SME 36 chargé de l'initialisation, du maintien et de la coupure d'une liaison sous-réseau,
- un module logiciel IDRP 33 chargé plus spécifiquement du routage,
- un module logiciel "Applis ATC" 34 chargé de l'exécution des tâches relevant du contrôle aérien, et
- un module logiciel "Applis AOC" 35 chargé de l'exécution des tâches relevant de la gestion de l'aéronef.

Ces différents modules logiciels ne seront pas détaillés car ils ne font pas partie de l'invention. Ils sont conçus par des spécialistes du génie logicielle en tenant compte à la fois des spécificités des équipements embarqués à bord de l'aéronef, des protocoles normalisés du réseau ATN et des desiderata des autorités de contrôle du trafic aérien et de la compagnie exploitant l'aéronef.

A l'heure actuelle, une fois que le module logiciel CMA a déterminé la nécessité d'une liaison avec le sol par l'intermédiaire du réseau ATN, il active le module logiciel de routage IDRP qui effectue une reconnaissance des stations sol disponibles et de leurs possibilités en sous-réseaux de communication air-sol selon une procédure normalisée et établit, en fonction des résultats de cette reconnaissance, l'adresse ou les adresses possibles, dans le réseau ATN, du correspondant à contacter. En effet, une adresse ATN dite NSAP (abréviation de l'expression anglo-saxonne " Network Service Access Point ") est constituée d'un mot binaire codée suivant une structure hiérarchique arborescente à plusieurs champs d'informations permettant d'effectuer le routage au sein de la topologie ATN dont, en préfixe, l'adresse de la station sol servant d'accès au réseau ATN. Lorsqu'il y a plusieurs adresses NSAP proposées par le module logiciel IDRP, comme c'est le cas lorsque plusieurs sous-réseaux de communication ou plusieurs stations sol sont disponibles, le module logiciel SN-SME doit choisir l'une d'entre elles. Pour ce choix, le module logiciel SN-SME peut faire appel au pilote mais cela s'ajoute aux autres tâches déjà à sa charge. Aussi on a cherché à automatiser ce choix dotant le module logiciel SN-SME d'un programme de choix d'adresse NSAP en cas de possibilité multiple établissant, pour chaque adresse NSAP possibles, une note de préférence tirée d'informations sur le réseau ATN stockée dans une base de données embarquée et choisissant l'adresse NSAP ayant obtenu la meilleure note de préférence.

Cette base de données, qui est celle stockée dans la partie de mémoire 23, renferme des informations relatives aux stations sol et aux sous-réseaux de communication air-sol qu'elles admettent, notamment, :
- les consignes du pilote,
- les consignes de la compagnie aérienne exploitant l'aéronef,
- les coûts,
- les performances,
- la sécurité, fiabilité,
- l'appartenance de la station sol à tel ou tel fournisseur d'accès,
- la nationalité de la station sol,
- etc.

Comme le réseau ATN est dans une phase évolutive, avec un renforcement permanent du nombre de stations sol et donc de la concurrence entre fournisseurs d'accès au réseau terrestre, cette base de données a tendance à grossir et occuper un espace mémoire de plus en plus important. En outre, elle doit être remise à jour de manière assez fréquente pour suivre l'évolution du réseau ATN et des offres commerciales des fournisseurs d'accès.

Pour remédier à ces problèmes, on propose de limiter la couverture de la base de données embarquée rassemblant les informations sur le réseau ATN aux seules stations sol placées sur la route ou à proximité de la route prévue dans le plan de vol de l'aéronef et même de munir cette base de données d'un classement de ses informations en fonction de la disponibilité des stations sol retenues eu égard à la position de l'aéronef sur sa route prévue. Cette limitation et cette classification sont faciles à mettre en oeuvre si la base de données embarquée relative au réseau ATN est construite lors de la préparation du plan de vol. En effet, lors de cette préparation, il est facile, une fois que la route prévue pour l'aéronef est connue, d'utiliser cette route pour sélectionner les stations sol dont elle traverse la zone de couverture au sein d'une base de données centralisant au sol l'ensemble des préférences de la compagnie exploitante sur les stations sol du réseau ATN, leurs localisations géographiques et leurs zones individuelles de couverture, cette opération de sélection pouvant être faite de manière entièrement automatique par un automate spécialement programmé à cet effet.

Le renouvellement, à chaque préparation de plan de vol, de la base de données embarquée relative au réseau ATN permet à une compagnie exploitante de reporter toutes les mises à jour sur une seule base de données globale et centralisée de référence et, éventuellement quelques répliques, qui peuvent être interrogées à distance et qui sont situées dans ses centres d'exploitation.

L'opération de sélection réduit le volume de la base de données embarquée consacrée au réseau ATN, ce qui diminue les exigences en capacité mémoire d'un routeur embarqué.

La classification des informations de la base de données embarquée relative au réseau ATN en fonction de la position de l'aéronef sur sa route prévue dans le plan de vol donne un moyen rapide de connaître, à partir de la position de l'aéronef fournie par ses équipements de navigation, l'ensemble des stations sol ayant réellement la possibilité d'être disponibles. Grâce à elle, le programme de choix d'adresse de la station sol du module logiciel SN-SME ayant directement accès aux adresses des stations sol normalement disponibles puisque l'aéronef se trouve alors dans leurs zones de couverture, il est même concevable de supprimer l'étape de reconnaissance entre le routeur embarqué à bord de l'aéronef avec les routeurs sol et de tenter un appel direct de l'adresse NSAP présentant la meilleure note de préférence. En effet, un échec est improbable dans la mesure où la base de données centralisée est correctement mise à jour puisque l'on est assuré que l'aéronef se trouve dans sa zone de couverture. Si malgré tout, la liaison ne peut s'établir par suite d'encombrement ou de dysfonctionnement de la station sol élue, on peut se rabattre sur l'adresse NSAP de rang immédiatement inférieur dans le classement par note de préférence délivrée par la base de donnée embarquée pour la position considérée de l'aéronef. Cette classification permet, par la prise en compte des informations de position délivrées par les équipements de navigation de l'aéronef, une accélération des procédures d'établissement d'une communication par le réseau ATN tout en laissant aux compagnies et au pilote toute liberté quant au choix de la station sol utilisée comme point d'accès au réseau terrestre ATN.

L'architecture du routeur embarqué n'est pas rendue plus complexe pour autant puisqu'il est déjà interfacé avec les équipements de navigation de l'aéronef pour l'exécution de certaines tâches relevant du contrôle aérien par le un module logiciel "Applis ATC" 34 comme par exemple le signalement périodique de la position de l'aéronef estimée par ses équipements de navigation.

En résumé, le procédé repose sur un l'échange d'informations entre les équipements de navigation de l'aéronef tels qu'un système de gestion de vol FMS (abréviation de l'anglo-saxon "Flight Management System ") et le routeur ATN embarqué contenant les logiciels pilotant le système de communication air-sol et sur l'utilisation d'une base de données embarquée contenant un fichier de configuration maîtrisé par l'exploitant de l'aéronef, permettant de définir des stations sol, avec un ordre de préférence, à choisir en fonction de la position de l'aéronef, comme point d'accès au réseau terrestre ATN. Cela permet de simplifier les procédures d'établissement de connexion tout en laissant une grande autonomie à l'exploitant de l'aéronef.

Dans la pratique, la base de données embarquée relative au réseau ATN est constituée d'un fichier faisant la correspondance entre la situation géographique et les stations sol qu'il est possible de choisir affectées d'une note de préférence attribuée par l'exploitant de l'aéronef. Le fichier est défini lors de la préparation du plan de vol à partir de la route prévue pour l'aéronef et d'un fichier global rassemblant les préférences de l'exploitant de l'aéronef sur les stations sol du réseau ATN et les sous-réseaux de communication utilisables pour entrer en communication avec chacune d'elles. Il donne, pour chaque position géographique de l'aéronef le long de sa route, les stations sol accessibles, c'est-à-dire renfermant cette position géographique dans leurs zones de couverture, classées selon un ordre de préférence. Une fois défini, il est chargé avant le départ de l'aéronef dans le routeur de l'aéronef, préférablement, au moment où le plan de vol est chargé dans le système de gestion du vol.

Lorsque l'aéronef parcourt sa route, il lui arrive de changer de zone de couverture de station sol du réseau ATN. II en est averti par la réception d'une information dite MO (abréviation de l'anglo-saxon "Managed Object "). cette information MO est utilisée par le module logiciel SN-SME du routeur embarqué pour :
- soit, pour des raisons définies dans les standards de normalisation, basculer sur une station sol imposée,
- soit, consulter la position géographique donnée par les équipements de navigation, sélectionner les stations sol figurant dans la base de données embarquée relative au réseau ATN, à l'adresse correspondant à la position géographique obtenue et choisir parmi les stations sol sélectionnées, celle avec qui communiquer, en tenant compte de l'ordre de préférence déduit des informations mémorisées.

Une fois déterminée la prochaine station sol avec laquelle entrer en communication, le module logiciel SN-SME du routeur introduit dans la pile de communication les messages définis dans les normes du réseau ATN et destinés à notifier un changement de station sol.

Au cours du vol de l'aéronef, le statut de fonctionnement de certaines stations sol du réseau ATN peut changer ou le plan de vol de l'aéronef être modifié. Les informations de la base de données embarquée concernant le réseau ATN deviennent alors caduques.

Dans le cas d'une station sol devenant indisponible, la tentative de connexion avorte d'elle-même en l'absence de réponse de la station et le choix se reporte sur la prochaine station sol figurant dans la liste fournie par la base de données classée par ordre de préférence. S'il n'y en a pas, plusieurs options sont envisageables, essai de connexion avec une précédente station sol en retardant fictivement la position de l'aéronef sur sa route ou avec une station sol futur en avançant fictivement la position de l'aéronef sur sa route, attente de pénétration dans la zone de couverture d'une autre station sol si les messages à faire parvenir au sol ne présentent pas d'urgence particulière. Il faut cependant voir que le cas d'une station sol devenant indisponible de manière imprévue est hautement improbable car cela signifie que l'ensemble de ses moyens de communication air-sol par les différents sous-réseaux devient subitement indisponible.

Dans le cas ou le plan de vol est modifié en cours de route, deux possibilités se présentent, soit la base de données a été prévue suffisamment large en terme de paires de position géographique-adresse de station sol pour couvrir l'écart par rapport à la route initiale, soit la base de données ne couvre plus la position actuelle de l'aéronef, ce qui ne peut se produire que si l'écart par rapport au plan de vol est conséquent, supérieur à 300 Km, et le pilote rentre manuellement l'adresse d'une station sol à contacter. Dans le cadre des évolutions requises par l'OACI pour les communications air-sol, il est prévu que les messages concernant les modifications du plan de vol seront échangés avec les contrôleurs aériens. Ceux-ci pourront alors ajouter à la pile de communication de l'aéronef, une information de basculement automatique vers une station sol couvrant la zone dans laquelle se trouve l'aéronef.

Par rapport à une base de données embarquée classique, même incomplète, concernant le réseau ATN, le fait d'adopter une classification en fonction de la position géographique de l'aéronef accélère le processus de choix d'une station sol du réseau ATN car, lors d'un trajet survolant de nombreuses zones de couverture de stations sol, il n'est plus nécessaire de confronter l'information de disponibilité de station sol parvenant à l'aéronef avec l'ensemble des éléments contenus dans la base de données. D'autre part, cela laisse une entière maîtrise des communications à la compagnie exploitante qui de ce fait peut assurer un meilleur contrôle des coûts de communications.

## Revendications

1. Procédé de sélection d'une station sol (5, 6) au sein d'un réseau aéronautique de télécommunication comportant un réseau terrestre (9) accessible par un ensemble de stations sol (5, 6), le dit procédé mettant en oeuvre, au moyen d'un organe de décision, un critère de disponibilité et un critère de préférence sur les éléments d'une base de données embarquée à bord de l'aéronef rassemblant des informations sur les stations sol et les modes de communication air-sol qui leur sont adaptés avec un système de notations, et comprenant les étapes suivantes:
lors de la préparation d'un plan de vol d'un aéronef et après détermination de la route de l'aéronef,
- limiter les informations contenues dans la base de données embarquée aux stations sol (5, 6) dont les zones de couverture sont à portée de la route de l'aéronef définie par le plan de vol,
- adopter pour éléments de la base de données embarquée des notes de préférence associées à des identifiants repérant des couples formés chacun d'une station sol (5, 6) sélectionnée et d'un ou plusieurs modes de communication air-sol adapté a la station considérée,
- établir une classification sur les éléments de la base de données embarquée tenant compte, pour chaque élément, de la position de la zone de couverture de la station sol qu'il concerne, par rapport à la route de l'aéronef définie par le plan de vol, ladite classification se manifestant par un adressage des éléments de la base de données fonction de la position de l'aéronef sur la route définie par son plan de vol,
- charger cette base de données à bord de l'aéronef et,
lors de l'exécution du plan de vol par un système de gestion du vol équipant l'aéronef et donnant périodiquement la position de l'aéronef sur la route définie par le plan de vol,
- faire sélectionner, par l'organe de décision, dans la base de données embarquée, l'un des couples ou le couple station sol mode de communication air-sol et sol-air ayant la meilleure note de préférence parmi ceux dont les identifiants figurent dans la base de données à l'adresse correspondant à la dernière position de l'aéronef communiquée par son système de gestion du vol.

## Patentansprüche

1. Verfahren zur Auswahl einer Bodenstation (5, 6) innerhalb eines Flugfernmeldenetzes, das ein für eine Gruppe von Stationen (5, 6) zugängliches Bodennetz (9) aufweist, wobei das Verfahren mittels eines Entscheidungsorgans ein Verfügbarkeitskriterium und ein Bevorzugungskriterium an die Elemente einer an Bord des Luftfahrzeugs befindlichen Datenbank anwendet, die Informationen über die Bodenstationen und die für sie ausgelegten Luft-Boden-Kommunikationsmodi mit einem System von Benotungen sammelt, und das die folgenden Schritte aufweist:
bei der Vorbereitung eines Flugplans eines Luftfahrzeugs und nach der Bestimmung der Route des Luftfahrzeugs,
- Begrenzen der Informationen, die in der Datenbank enthalten sind, die in die Bodenstationen (5, 6) eingebaut ist, deren Überdeckungszonen sich in Reichweite der vom Flugplan definierten Route des Luftfahrzeugs befinden,
- für Elemente der eingebauten Datenbank, Übernahme von Bevorzugungsnoten, die Kennungen zugeordnet sind, welche von einer ausgewählten Bodenstation (5, 6) und einem oder mehreren für die betrachtete Station ausgelegten Luft-Boden-Kommunikationsmodi gebildete Paare markieren,
- Erstellen einer Klassifizierung der Elemente der eingebauten Datenbank unter Berücksichtigung, für jedes Element, der Position der Überdeckungszone der Bodenstation, die es betrifft, bezüglich der vom Flugplan definierten Route des Luftfahrzeugs, wobei die Klassifizierung in einer Adressierung der Elemente der Datenbank in Abhängigkeit von der Position des Luftfahrzeugs auf der von seinem Flugplan definierten Route vorliegt,
- Laden dieser Datenbank an Bord des Luftfahrzeugs, und
bei der Ausführung des Flugplans durch ein zur Ausstattung des Luftfahrzeugs gehörendes Flugmanagementsystem, das periodisch die Position des Luftfahrzeugs auf der vom Flugplan definierten Route angibt,
- Auswahl durch das Entscheidungsorgan in der eingebauten Datenbank eines der Paare oder das Paar aus Bodenstation und Luft-Boden- und Boden-Luft-Kommunikationsmodus mit der besten Bevorzugungsnote unter denjenigen, deren Kennungen sich in der Datenbank an der Adresse befinden, die der letzten Position des Luftfahrzeugs entspricht, die von seinem Flugmanagementsystem mitgeteilt wurde.

## Claims

1. Method of selecting a ground station (5, 6) within an aeronautical telecommunications network including a terrestrial network (9) which can be accessed via a set of ground stations (5, 6), the said method implementing, by means of a decision unit, an availability criterion and a preference criterion regarding the elements of an on-board database aboard the aircraft mustering information on the ground stations and the modes of air-ground communications that are adapted to them with a system of notation, and comprising the following steps:
during the preparation of a flight plan for an aircraft, and after determining the route of the aircraft,
- limiting the information contained in the onboard database to the ground stations (5, 6) whose areas of coverage are within the range of the route of the aircraft defined by the flight plan,
- adopting for elements of the onboard database preference scores associated with identifiers denoting pairs each formed by a selected ground station (5, 6) and by one or more air-ground communications modes which are compatible with the station in question,
- establishing a classification as to the elements of the on-board database which takes into account, for each element, the position of the area of coverage of the ground station to which it relates, with respect to the route of the aircraft defined by the flight plan, the said classification being manifested by an addressing of the elements of the database as a function of the position of the aircraft along the route defined by its flight plan,
- loading this database on board the aircraft and,
upon execution of the flight plan by a flight-management system equipping the aircraft and periodically giving the position of the aircraft on the route defined by the flight plan,
- having the decision unit select, from the on-board database, one of the pairs or the ground station air-ground and ground-air communications mode pair having the best preference score from among those the identifiers of which feature in the database at the address corresponding to the last position of the aircraft communicated by its flight-management system.
